# EUROPEAN PATENT APPLICATION

(11) **EP 4 755 778 A1**
(43) Date of publication of application: **10.06.2026**
(21) Application number: 24847632.7
(22) Date of filing: 09.04.2024
(51) Int. Cl.: B62M 9/122, B62M 9/126, B62M 9/128, B62J 43/30

(54) **ELECTRIC DERAILLEUR**

(30) Priority: 01.08.2023 CN 202310958198; 01.08.2023 CN 202310958199
(71) Applicant: Song, Zeyu, Jinhua, Zhejiang 321102 (CN)
(72) Inventor: DONG, Jie, Jinhua, Zhejiang 321102 (CN); YUAN, Ming, Jinhua, Zhejiang 321102 (CN); SONG, Zeyu, Jinhua, Zhejiang 321102 (CN)
(74) Representative: Chung, Hoi Kan
(86) International application number: PCT/CN2024/086782
(87) International publication number: WO 2025/025666

(57) **Abstract**

An electric derailleur includes a fixed base, a driving device, a movable member, a chain guide member, and a linkage. The movable member is configured to be movable relative to the fixed base, the chain guide member is rotatably connected to the movable member, and opposite ends of the linkage are pivotally connected to the movable member and the fixed base, respectively. The driving device is disposed on the linkage and comprises a transmission shaft configured to drive the movable member and the linkage to move relative to the fixed base, the transmission shaft being pivotally connected to the linkage and the movable member, and a shifting member driven by rotation of the transmission shaft. The shifting member is configured to apply a force to the movable member so as to drive the movable member and the linkage to move. The electric derailleur improves power transmission performance.

## Description

### TECHNICAL FIELD

The present application relates to the technical field of bicycles, and more particularly to an electric derailleur.

### BACKGROUND OF THE INVENTION

A derailleur is an important component of a multi-speed bicycle and is used to shift a chain between sprockets of different sizes to achieve gear changes. Existing derailleurs include manually operated derailleurs actuated by a control cable and electric derailleurs driven by a motor. Conventional electric derailleurs generally include a motor assembly, a linkage, and a chain guide member, wherein the linkage is pivotally connected to the chain guide member, and a chain passes through the chain guide member. The motor assembly applies a driving force to move the chain guide member, thereby shifting the chain between sprockets of different sizes. Forward and reverse rotation of the motor assembly drives the chain guide member to move in opposite directions, enabling the chain to shift back and forth between different sprockets. For example, Chinese Patent Application Publication No. CN103707996A discloses an electric rear derailleur for a bicycle. However, in this prior art, the motor, i.e., the motor unit, is mounted on a base member, and an output end of the motor drives a movable member via a linkage, which in turn drives the chain guide member. As a result, the power transmission path is relatively long, leading to unsatisfactory power transmission efficiency.

In view of the foregoing, it is necessary to propose a new technical solution to overcome the problems existing in the prior art.

### SUMMARY OF THE INVENTION

The present application provides an electric derailleur capable of improving power transmission performance.

To achieve the foregoing objective, the present application adopts the following technical solution. An electric derailleur includes a fixed base, a driving device, a movable member, a chain guide member, and a linkage. The movable member is configured to be movable relative to the fixed base. The chain guide member is rotatably connected to the movable member. Opposite ends of the linkage are pivotally connected to the movable member and the fixed base, respectively. The driving device is disposed on the linkage, and the driving device includes:
a transmission shaft configured to drive the movable member and the linkage to move relative to the fixed base, wherein the transmission shaft is pivotally connected to the linkage and the movable member; and
a shifting member driven by the transmission shaft to rotate, the shifting member being configured to apply a force to the movable member so as to drive the movable member and the linkage to move.

As a further improved technical solution of the present application, the driving device includes a motor having an output end drivingly connected to the transmission shaft, wherein the output end is located at an end of the linkage facing the movable member.

As a further improved technical solution of the present application, the linkage includes an upper link and a lower link that are pivotally connected to the fixed base and the movable member, respectively, and the upper link and the lower link move in response to movement of the movable member relative to the fixed base.

As a further improved technical solution of the present application, a load-limiting device is disposed between the shifting member and the movable member, the load-limiting device being configured to disengage a transmission connection between the shifting member and the movable member when a load borne by the movable member exceeds a load threshold.

As a further improved technical solution of the present application, the load-limiting device includes a protruding member simultaneously connected to the shifting member and the movable member, the protruding member being configured to transmit power to the movable member in a rotational direction of the shifting member.

As a further improved technical solution of the present application, the protruding member is a ball, and the shifting member is provided with a hemispherical recess configured to accommodate a portion of the ball.

As a further improved technical solution of the present application, the load-limiting device includes an elastic member elastically biasing the ball toward the shifting member.

As a further improved technical solution of the present application, an elastic preload member is disposed between the shifting member and the movable member, and the shifting member drives the movable member to rotate through the elastic preload member in at least one direction of movement.

As a further improved technical solution of the present application, the elastic preload member is a torsion spring sleeved on the transmission shaft, wherein one end of the torsion spring abuts against the shifting member and the other end abuts against the movable member.

As a further improved technical solution of the present application, a biasing member is disposed between the upper link and the fixed base, the biasing member being configured to provide a biasing force to the upper link in one rotational direction of the upper link relative to the fixed base, the biasing force being conducive to movement of the upper link.

As a further improved technical solution of the present application, the biasing member is a torsion spring, with one end of the torsion spring abutting against the upper link and the other end abutting against the fixed base.

As a further improved technical solution of the present application, a battery module for supplying electrical power to the driving device is detachably attached to the fixed base.

As a further improved technical solution of the present application, the electric derailleur includes a wireless communication device, the wireless communication device being disposed in the battery module.

As a further improved technical solution of the present application, the derailleur is a bicycle rear derailleur.

In the electric derailleur provided by the present application, the driving device is disposed on the linkage, and the transmission shaft included in the driving device is pivotally connected to the linkage and the movable member. A shifting member driven by the transmission shaft applies a force directly to the movable member so as to drive the movable member and the linkage to move. In this manner, the driving force of the driving device is not transmitted to the movable member through the linkage, but is instead applied more directly to the movable member, thereby shortening a power transmission path and improving power transmission performance.

### BRIEF DESCRIPTION OF DRAWINGS

In order to more clearly illustrate the technical solutions of the embodiments of the present application, the accompanying drawings of the embodiments are briefly described below. It should be understood that the drawings described below relate only to certain embodiments of the present application and do not limit the present application.
FIG. 1 is a perspective assembled view of an electric derailleur according to the present application.
FIG. 2 is a perspective exploded view of the electric derailleur according to the present application.
FIG. 3 is a perspective view of a lower link and a driving device of the electric derailleur according to the present application.
FIG. 4 is a perspective assembled view of the electric derailleur according to the present application with a chain guide member removed.
FIG. 5 is a perspective exploded view of the electric derailleur according to the present application with the chain guide member removed.
FIG. 6 is a perspective exploded view of the electric derailleur according to the present application with the chain guide member removed, taken from another viewing angle.
FIG. 7 is a perspective view of a lower link, a driving device, and a movable member of the electric derailleur according to the present application.

Reference numerals: 100-derailleur; 1-fixed base; 11-first rotating shaft; 12-second rotating shaft; 13-third rotating shaft; 14-mounting portion; 2-upper link; 3-lower link; 31-inner housing; 32-middle frame; 33-outer housing; 34-gear cover; 4-movable member; 41-mounting groove; 42-load-limiting device; 421-ball; 422-elastic member; 5-driving device; 51-motor; 52-gear set; 53-screw rod; 54-worm wheel; 55-transmission shaft; 551-shifting member; 5510-hemispherical recess; 552-elastic preload member; 6-chain guide member; 7-battery module; 8-biasing member.

### DETAILED DESCRIPTION OF THE INVENTION

In order to make the objectives, technical solutions, and advantages of the embodiments of the present application more clearly understood, the present application is described in further detail below with reference to the accompanying drawings. It should be noted that the components described and illustrated in the accompanying drawings herein may be arranged and designed in various different configurations. Based on the embodiments disclosed in the present application, all other embodiments obtained by those of ordinary skill in the art without creative effort shall fall within the scope of protection of the present application.

It should be noted that similar reference numerals and letters in the following drawings denote similar elements. Therefore, once an element is defined in one drawing, it need not be further defined or explained in subsequent drawings.

Unless otherwise defined, technical or scientific terms used in this patent document shall have the ordinary meanings understood by persons of ordinary skill in the art to which the present application pertains. The terms "first," "second," and the like used in the specification and claims of the present application do not denote any order, quantity, or importance, but are merely used to distinguish different components. Similarly, terms such as "a," "an," or "the" do not indicate a limitation of quantity, but rather indicate the presence of at least one. Terms such as "include" or "comprise" indicate that the elements or items listed after "include" or "comprise" are included, together with equivalents thereof, and do not exclude the presence of other elements or items. Terms such as "center," "upper," "lower," "left," "right," "vertical," "horizontal," "inner," and "outer" are used only to indicate relative positional relationships. When the absolute position of the described object changes, the relative positional relationships may change accordingly. Such terms are used solely for convenience of description and simplification of the present application, and do not indicate or imply that the referenced device or element must have a particular orientation or be constructed or operated in a particular orientation, and therefore shall not be construed as limiting the present application.

In the description of the present application, it should be understood that, unless otherwise expressly specified and limited, the terms "mounted," "connected," and "coupled" should be interpreted broadly. For example, such connections may be fixed connections, detachable connections, or integrally formed connections; may be mechanical connections or electrical connections; may be direct connections or indirect connections through intermediate media; or may be internal communication between two elements. Persons of ordinary skill in the art may understand the specific meanings of these terms in the present application based on particular circumstances.

Some embodiments of the present application are described in detail below with reference to the accompanying drawings. Features of the embodiments described below may be combined with one another without conflict.

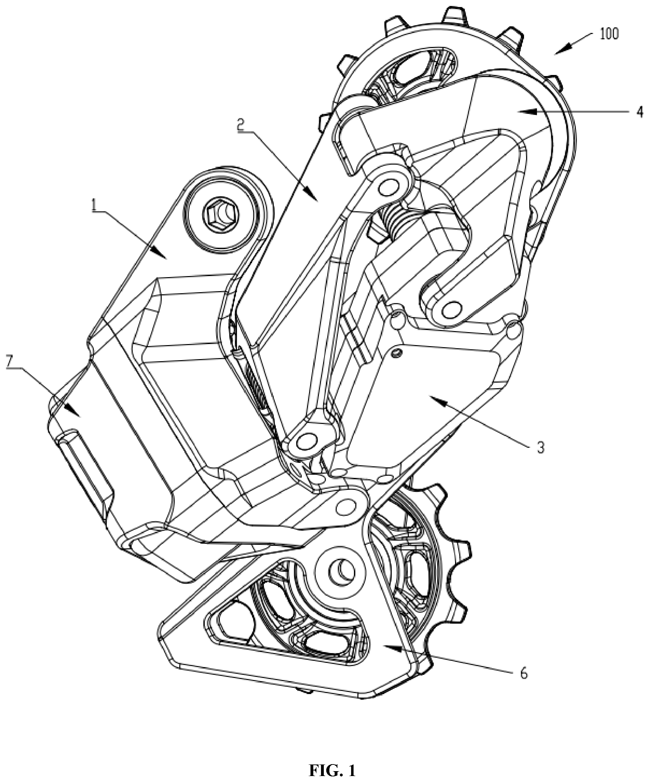

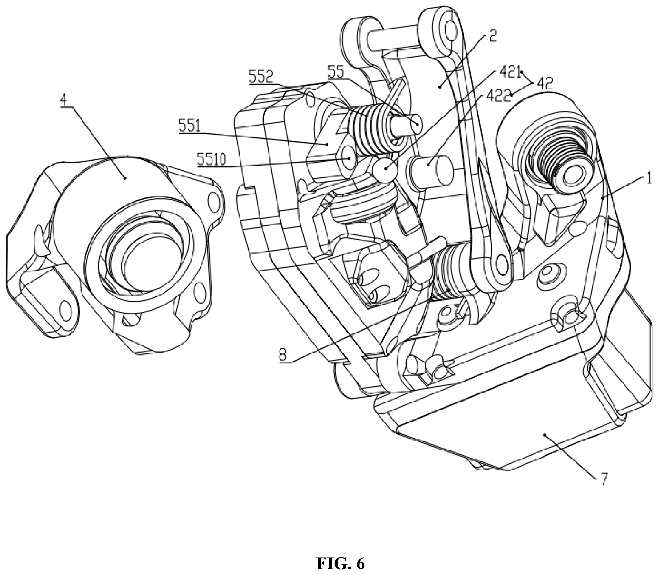

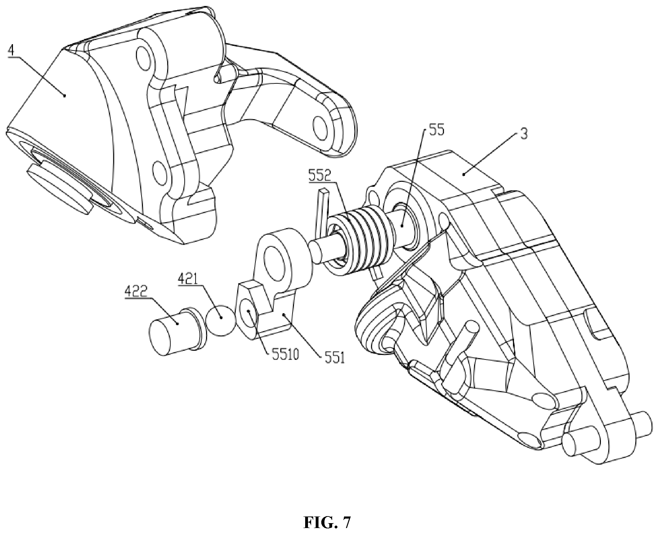

Referring to FIGS. 1 through 7, the present application provides an electric derailleur 100 for shifting a chain between sprockets of different sizes to achieve gear changes. The derailleur 100 includes a fixed base 1, a driving device 5, a movable member 4, a chain guide member 6, a linkage, and a battery module 7. The linkage includes an upper link 2 and a lower link 3.

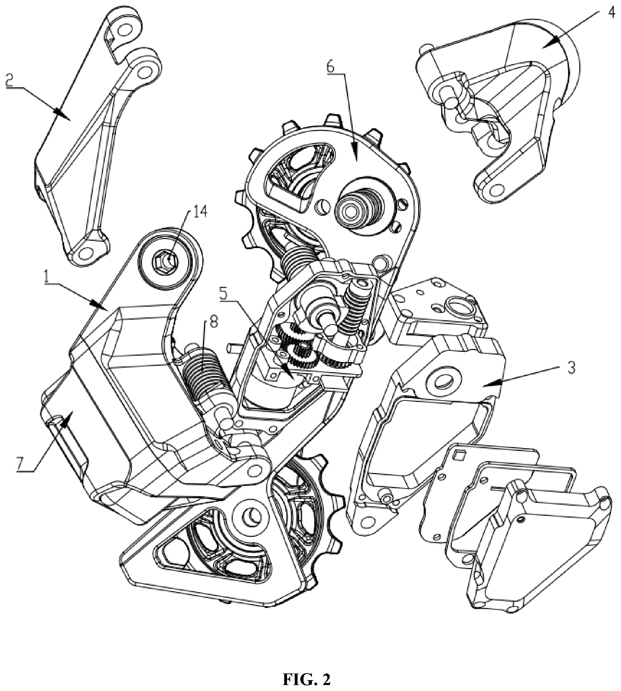

Referring to FIGS. 1 and 2, the fixed base 1 serves as a base structure on which the upper link 2, the lower link 3, the movable member 4, the driving device 5, the chain guide member 6, and the battery module 7 are directly or indirectly mounted. The fixed base 1 is further configured to be mountable to a bicycle frame, such that the derailleur 100 is mounted to the bicycle frame via the fixed base 1. In the present embodiment, the fixed base 1 is provided with a mounting portion 14, by which the fixed base 1 and the entire derailleur 100 are connected to the bicycle frame. The mounting portion 14 may be implemented as a screw, a clip, a strap, or the like, provided that it is sufficient to achieve secure attachment between the fixed base 1 and the bicycle frame.

The movable member 4 is configured to be movable relative to the fixed base 1, and the chain guide member 6 is rotatably connected to the movable member 4. The chain guide member 6 is configured to be movable relative to the fixed base 1, and includes two side plates arranged substantially in parallel and a guide pulley connected between the two side plates. A bicycle chain is received between the two side plates of the chain guide member 6 and is trained around the guide pulley. When a gear shift is required, the chain guide member 6 is driven to move, such that the chain guide member 6 pushes the chain to shift the chain between sprockets of different sizes to achieve gear changes, while chain tension is maintained by the guide pulley.

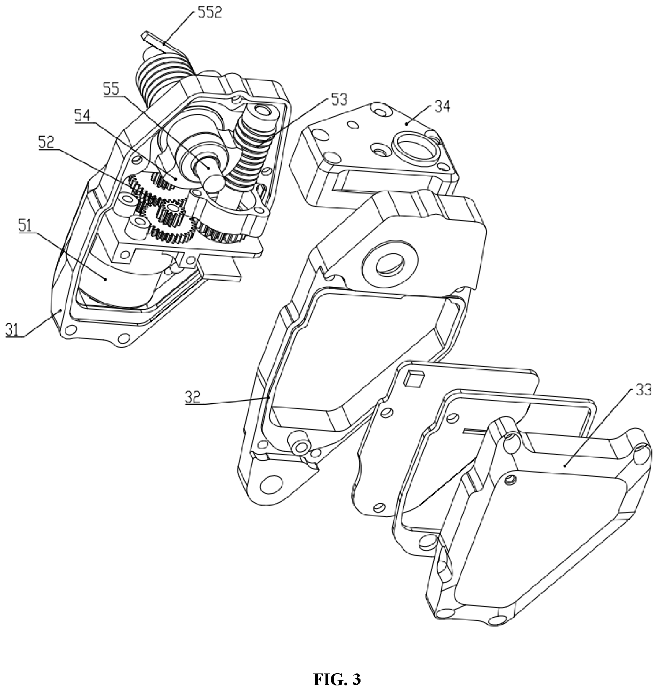

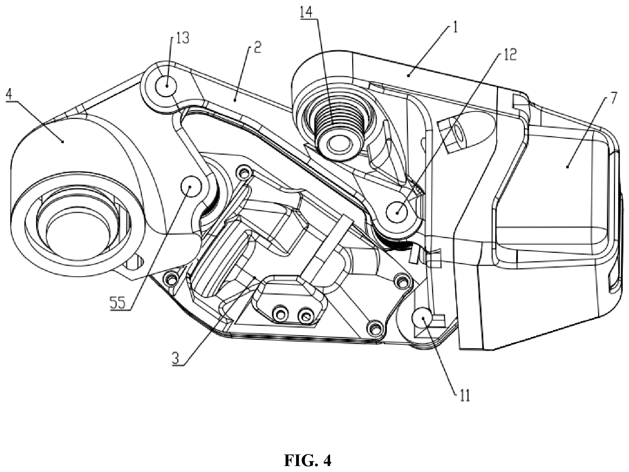

Referring also to FIG. 4, opposite ends of the linkage are pivotally connected to the movable member 4 and the fixed base 1, respectively. That is, opposite ends of the upper link 2 and the lower link 3 are pivotally connected to the fixed base 1 and the movable member 4, respectively, such that the fixed base 1, the upper link 2, the lower link 3, and the movable member 4 form a four-bar linkage mechanism. In the present embodiment, the upper link 2 is generally plate-shaped and is positioned above the lower link 3. One end of the upper link 2 is pivotally connected to the fixed base 1 via a second rotating shaft 12, and an opposite end thereof is pivotally connected to the movable member 4 via a third rotating shaft 13. The lower link 3 is configured as a mounting base for installing the driving device 5. One end of the lower link 3 is pivotally connected to the fixed base 1 via a first rotating shaft 11, and an opposite end thereof is pivotally connected to the movable member 4 via the transmission shaft 55 of the driving device 5. Referring also to FIG. 3, specifically, the lower link 3 includes an inner housing 31, a middle frame 32, an outer housing 33, and a gear cover 34. An installation space for accommodating the driving device 5 is formed within the inner housing 31. The middle frame 32 is fixed to the inner housing 31, and one end of the middle frame 32 is pivotally connected to the fixed base 1. The outer housing 33 covers the inner housing 31 and the middle frame 32 to enclose the driving device 5. The gear cover 34 covers a gear set 52 of the driving device 5 to protect the gear set 52.

Referring particularly to FIGS. 2 and 3, the driving device 5 is disposed on the linkage, and specifically on the lower link 3. The driving device 5 includes a motor 51, a gear set 52 driven by an output end of the motor 51, a screw rod 53 rotated by the gear set 52, a worm wheel 54 meshing with and drivingly engaged with the screw rod 53, a transmission shaft 55 rotated by the worm wheel 54, and a shifting member 551 sleeved on the transmission shaft 55. The transmission shaft 55 is configured to drive the movable member 4 and the linkage to move relative to the fixed base 1, and the transmission shaft 55 is pivotally connected to the lower link 3 and the movable member 4. The shifting member 551 is fixed relative to the transmission shaft 55 in a circumferential direction of the transmission shaft 55, such that rotation of the transmission shaft 55 drives the shifting member 551 to rotate synchronously. The shifting member 551 is driven by the transmission shaft 55 to rotate and applies a force to the movable member 4 so as to drive the movable member 4 and the linkage to move. The output end of the motor 51 is drivingly connected to the transmission shaft 55, and the output end is located at an end of the lower link 3 facing the movable member 4. The output end of the motor 51 is oriented toward the movable member 4, which facilitates connection with the transmission shaft 55. In addition, a connection location between the lower link 3 and the movable member 4 provides greater available space compared with a connection location between the lower link 3 and the fixed base 1, thereby facilitating installation of components such as the gear set 52, the screw rod 53, and the worm wheel 54. During operation, the motor 51 is actuated to drive the transmission shaft 55 to rotate through the gear set 52, the screw rod 53, and the worm wheel 54. Rotation of the transmission shaft 55 drives the shifting member 551 to rotate, and the shifting member 551 pushes the movable member 4 to move relative to the fixed base 1. The upper link 2 and the lower link 3 rotate about the second rotating shaft 12 and the first rotating shaft 11, respectively, in response to movement of the movable member 4 relative to the fixed base 1.

In the present application, by disposing the driving device 5 on the lower link 3 and pivotally connecting the transmission shaft 55 of the driving device 5 to the lower link 3 and the movable member 4, the shifting member 551 driven by the transmission shaft 55 applies a force directly to the movable member 4 so as to drive the movable member 4 and the linkage to move. In this manner, the driving force of the driving device 5 is not transmitted to the movable member 4 through the linkage, but is instead applied directly to the movable member 4, thereby shortening the power transmission path and improving power transmission performance.

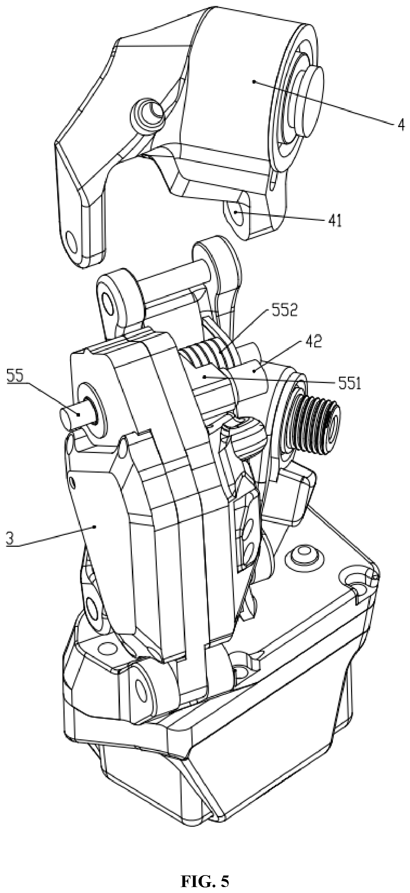

Referring to FIGS. 5 through 7, a load-limiting device 42 is disposed between the shifting member 551 and the movable member 4. Compared with a connection position between the lower link 3 and the fixed base 1, a connection position between the lower link 3 and the movable member 4 provides greater available space, which facilitates arrangement of the load-limiting device 42. The load-limiting device 42 is configured to disengage a transmission connection between the shifting member 551 and the movable member 4 when a load borne by the movable member 4 exceeds a load threshold. Specifically, the load-limiting device 42 includes a protruding member simultaneously connecting the shifting member 551 and the movable member 4, and an elastic member 422 elastically biasing the protruding member toward the shifting member 551. The protruding member is configured to transmit power to the movable member 4 in a rotational direction of the shifting member 551. In the present embodiment, the protruding member is a ball 421, and the shifting member 551 is provided with a hemispherical recess 5510 configured to receive a portion of the ball 421. That is, approximately one half of the ball 421 is received in the shifting member 551, and approximately the other half is received in the movable member 4, such that rotation of the shifting member 551 applies a force to the movable member 4 via the ball 421 to cause the movable member 4 to move. The elastic member 422 is installed in a mounting groove 41 formed in the movable member 4 and elastically biases the ball 421 toward the shifting member 551, such that when the load applied to the movable member 4 does not exceed the load threshold, the ball 421 remains received in the hemispherical recess 5510 of the shifting member 551. When the load applied to the movable member 4 exceeds the load threshold, the ball 421 compresses the elastic member 422 to elastically deform, and the ball 421 disengages from the hemispherical recess 5510. At this time, the transmission connection between the shifting member 551 and the movable member 4 via the ball 421 is disengaged, and relative sliding movement occurs between the shifting member 551 and the movable member 4. The load threshold may be adjusted by changing factors such as an elastic force of the elastic member 422 or an engagement depth between the ball 421 and the hemispherical recess 5510. The magnitude of the load threshold may be preset during factory production according to practical requirements. The elastic member 422 may be a spring or an elastic pad made of rubber or the like.

Further, an elastic preload member 552 is disposed between the shifting member 551 and the movable member 4, and the shifting member 551 drives the movable member 4 to rotate through the elastic preload member 552 in at least one direction of movement. The elastic preload member 552 is a torsion spring sleeved on the transmission shaft 55, with one end of the torsion spring abutting against the shifting member 551 and the other end abutting against the movable member 4. The elastic preload member 552 is arranged in a torsionally compressed state between the shifting member 551 and the movable member 4 to generate a force urging the shifting member 551 and the movable member 4 toward each other. Provision of the elastic preload member 552 provides a preload force between the shifting member 551 and the movable member 4, and also provides a buffering effect therebetween, thereby avoiding impact caused by rigid contact, which could otherwise adversely affect operation of the derailleur 100 and reduce service life.

Referring again to FIG. 2, a biasing member 8 is disposed between the upper link 2 and the fixed base 1. The biasing member 8 is configured to provide a biasing force to the upper link 2 in one rotational direction of the upper link 2 relative to the fixed base 1, the biasing force being conducive to movement of the upper link 2. In the present embodiment, the biasing member 8 is a torsion spring, with one end of the torsion spring abutting against the upper link 2 and the other end abutting against the fixed base 1. When the upper link 2, together with the movable member 4 and the chain guide member 6, moves in one direction-for example, to drive the chain from a smaller sprocket to a larger sprocket or from a larger sprocket to a smaller sprocket-the biasing member 8 is compressed to store energy. When the upper link 2, together with the movable member 4 and the chain guide member 6, moves in an opposite direction, the compressed biasing member 8 releases elastic energy, thereby facilitating the shifting operation.

Referring to FIGS. 1 and 2, a battery module 7 for supplying electrical power to the driving device 5 is further detachably attached to the fixed base 1. The battery module 7 is configured as a relatively independent module, thereby facilitating operations such as disassembly, maintenance, inspection, and replacement. The detachable attachment may include, but is not limited to, snap-fit connection, screw connection, magnetic attachment, or the like. In one embodiment, the electric derailleur 100 is in wireless communication with a user-operated control device, for example, a finger-operated shifter used by the user to control the derailleur 100. The electric derailleur 100 includes a wireless communication device configured to receive, via wireless signals, shifting commands transmitted from the finger-operated shifter and to activate the driving device 5 to perform shifting operations. In the present embodiment, the wireless communication device is disposed in the battery module 7, such that the wireless communication device is closer to the exterior, which is conducive to transmission and reception of wireless signals and provides more responsive control. In one embodiment, the derailleur 100 is a bicycle rear derailleur.

From the foregoing description of the specific embodiments, it can be understood that in the electric derailleur 100 provided by the present application, the driving device 5 is disposed on the linkage, and the transmission shaft 55 included in the driving device 5 is pivotally connected to the linkage and the movable member 4. The shifting member 551 driven by the transmission shaft 55 applies a force directly to the movable member 4 so as to drive the movable member 4 and the linkage to move. In this manner, the driving force of the driving device 5 is not transmitted to the movable member 4 through the linkage, but is instead applied directly to the movable member 4, thereby shortening the power transmission path and improving power transmission performance.

The foregoing description relates only to specific embodiments of the present application, and the scope of protection of the present application is not limited thereto. Any modifications or substitutions that can be readily conceived by those skilled in the art within the technical scope disclosed in the present application shall fall within the scope of protection of the present application. Accordingly, the scope of protection of the present application shall be determined by the scope of the claims.

## Claims

1. An electric derailleur, comprising:
a fixed base;
a driving device;
a movable member;
a chain guide member; and
a linkage;
wherein the movable member is configured to be movable relative to the fixed base, the chain guide member is rotatably connected to the movable member, and opposite ends of the linkage are pivotally connected to the movable member and the fixed base, respectively;
wherein the driving device is disposed on the linkage, and the driving device comprises:
a transmission shaft configured to drive the movable member and the linkage to move relative to the fixed base, the transmission shaft being pivotally connected to the linkage and the movable member; and
a shifting member driven by rotation of the transmission shaft, the shifting member being configured to apply a force to the movable member so as to drive the movable member and the linkage to move.

2. The electric derailleur of claim 1, wherein the driving device comprises a motor having an output end drivingly connected to the transmission shaft, and the output end is located at an end of the linkage facing the movable member.

3. The electric derailleur of claim 1, wherein the linkage comprises an upper link and a lower link that are pivotally connected to the fixed base and the movable member, respectively, and the upper link and the lower link move in response to movement of the movable member relative to the fixed base.

4. The electric derailleur of claim 1, wherein a load-limiting device is disposed between the shifting member and the movable member, and the load-limiting device is configured to disengage a transmission connection between the shifting member and the movable member when a load borne by the movable member exceeds a load threshold

5. The electric derailleur of claim 4, wherein the load-limiting device comprises a protruding member simultaneously connecting the shifting member and the movable member, the protruding member being configured to transmit power to the movable member in a rotational direction of the shifting member when the load borne by the movable member does not exceed the load threshold.

6. The electric derailleur of claim 5, wherein when the load borne by the movable member exceeds the load threshold, the protruding member disengages from the shifting member or the movable member, such that relative sliding movement occurs between the shifting member and the movable member.

7. The electric derailleur of claim 5, wherein the protruding member is a ball, and the shifting member is provided with a hemispherical recess configured to receive a portion of the ball.

8. The electric derailleur of claim 7, wherein the load-limiting device comprises an elastic member elastically biasing the ball toward the shifting member.

9. The electric derailleur of claim 1, wherein an elastic preload member is disposed between the shifting member and the movable member, and the shifting member drives the movable member to rotate through the elastic preload member in at least one direction of movement.

10. The electric derailleur of claim 9, wherein the elastic preload member is a torsion spring sleeved on the transmission shaft, with one end of the torsion spring abutting against the shifting member and the other end abutting against the movable member.

11. The electric derailleur of claim 3, wherein a biasing member is disposed between the upper link and the fixed base, the biasing member being configured to provide a biasing force to the upper link in one rotational direction of the upper link relative to the fixed base, the biasing force being conducive to movement of the upper link.

12. The electric derailleur of claim 11, wherein the biasing member is a torsion spring, with one end of the torsion spring abutting against the upper link and the other end abutting against the fixed base.

13. The electric derailleur of claim 1, wherein a battery module for supplying electrical power to the driving device is detachably attached to the fixed base.

14. The electric derailleur of claim 13, wherein the electric derailleur comprises a wireless communication device disposed in the battery module.

15. The electric derailleur of claim 1, wherein the derailleur is a bicycle rear derailleur.
